(19) Europäisches Patentamt
European Patent Office
Office européen des brevets

(11) **EP 2 869 265 A1**

(12) **EUROPEAN PATENT APPLICATION**

(43) Date of publication:
**06.05.2015 Bulletin 2015/19**

(51) Int Cl.:
***G06T 7/00*** (2006.01)

(21) Application number: **14189158.0**

(22) Date of filing: **16.10.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **30.10.2013 EP 13005157**
**14.03.2014 EP 14305370**

(71) Applicant: **Thomson Licensing**
**92130 Issy-les-Moulineaux (FR)**

(72) Inventors:
• **Schlosser, Markus**
 **30177 Hannover (DE)**
• **Hoerentrup, Jobst**
 **30974 Wennigsen (DE)**
• **Krumwiede, Lars**
 **30167 Hannover (DE)**

(74) Representative: **Schmidt-Uhlig, Thomas**
 **Deutsche Thomson OHG**
 **European Patent Operations**
 **Karl-Wiechert-Allee 74**
 **30625 Hannover (DE)**

(54) **Method and apparatus for alpha matting**

(57)     A method and an apparatus (20) for performing alpha matting on an image are described. A contour retrieving unit (23) retrieves (10) object contour information for the image. An edge decision unit (24) then determines (11) hard edges based on the retrieved object contour information using an edge model. Finally, an alpha assignment unit (25) assigns (12) alpha values to pixels of the image in a vicinity of a determined hard edge based on the edge model.

```
┌─────────────────────────────┐
│   Retrieve object contour   │ ⟋ 10
│    information for the image │
└─────────────────────────────┘
              │
              ▼
┌─────────────────────────────┐
│  Determine hard edges based │ ⟋ 11
│  on object contour information │
└─────────────────────────────┘
              │
              ▼
┌─────────────────────────────┐
│  Assign alpha values at hard │ ⟋ 12
│  edges based on edge model   │
└─────────────────────────────┘
```

**Fig. 6**

EP 2 869 265 A1

**Description**

**FIELD OF THE INVENTION**

The invention relates to a method and an apparatus for performing alpha matting, as used in image segmentation or movie post-production. More specifically, a method and an apparatus for performing alpha matting with an improved handling of hard edges are described.

**BACKGROUND OF THE INVENTION**

Alpha matting refers to the problem of softly extracting a foreground object out of an image. In contrast to binary segmentation, where each pixel is either classified as fully foreground or background, alpha matting recognizes the existence of "mixed" pixels. A major reason for such mixed pixels is the limited resolution of cameras, where light from the foreground object and the background contribute to the incoming light of a CCD element. Other reasons can be defocus aberration and motion blur as well as (semi-)transparencies in the object itself.

The mixing coefficient is typically called "alpha". It is defined to lie in the interval [0, 1] and describes the fraction to which light from the foreground object contributed to the incident light on an image sensor element and thus to an image pixel. An alpha matting algorithm tries to estimate this alpha coefficient as well as the unmixed foreground and background colors. Each color is typically defined by three parameters, e.g. R, G, and B values, so alpha matting needs to determine seven unknowns from three knowns. The problem is thus ill-posed and requires additional constraints. One very common constraint is a trimap, which is provided along with the input image or sequences of input images. The trimap indicates three different types of regions: known foreground, known background, and an unknown region, for which alpha values shall be estimated.

The survey in J. Wang et al.: "Image and Video Matting: A Survey", Foundations and Trends® in Computer Graphics and Vision, Vol. 3 (2007), pp 97-175, provides a good overview over the state of the art in alpha matting. For most of the known algorithms, the border between unknown and known regions in the trimap is generally clearly visible in the estimated alpha mattes. The reason seems to be that the focus is typically placed on soft transitions, like hair and fur, where the advantages of alpha matting are most obvious, as opposed to binary segmentation. However, objects with hair, like humans, often also have parts with less hair.

In J. Wang: "Image Matting with Transductive Inference", Proceedings of the 5th international conference on Computer vision/computer graphics collaboration techniques (MIRAGE'11) (2011), pp. 239-250 the authors observed that "alpha values are often estimated in an aggressive way in previous approaches. In order to fully capture the fine details of fuzzy objects such as hair and fur, previous methods try to estimate fractional alpha values for all pixels under consideration, which often leads to erroneous mattes." As a solution, a "mixed pixel detector" is proposed, which provides a "mixture probability" for every pixel in the unknown area based on its estimated alpha value and a normalized distance between the observed pixel color and the line connecting the selected foreground and background color. In a subsequent global optimization stage, the alpha values are then forced to vary primarily in "high density regions of real mixed pixels". As the usage of the mixed pixel detector is not restricted to hard edges, it needs to make a decision on a per-pixel basis. It cannot take into account the very specific characteristics of this sharp but smooth transition from foreground to background, which is additionally rather stable along the object contour. As a consequence, the above approach is more general, but also much more complex and less powerful, as far as the special case of hard edges is concerned.

Instead of actually solving the problem, it can also be minimized by working on high-quality trimaps, where the unknown area is very narrow especially around hard object edges. In this case, the described artifacts are not avoided but restricted to small areas, and likely also softened. One example of an interactive method to generate such trimaps is presented in C. Rhemann et al.: "High Resolution Matting via Interactive Trimap Segmentation", Proceeding of the IEEE Conference on Computer Vision and Pattern Recognition (CVPR 2008) (2008), pp. 1-8. It is even proposed to explicitly detect "sharp boundaries" to specifically restrict the width of the unknown area. Unfortunately, the implementation details of this "simple classifier" remain rather vague. It is, however, clear that it requires the size of the blur kernel as input, which makes the task much easier. Finally, the classifier is only used to detect hard edges, but not to generate alpha values for them. A classical alpha matting algorithm is used in the next stage.

Interestingly, the proposed method does not end there. Its final stage is based on the assumption that "mixed pixels are mainly caused by the camera's point spread function (PSF)". As a consequence, the final alpha matte is produced by convolving a binary segmentation with an estimate of such a point spread function. It is empirically shown that their assumption not only holds for hard edges, but also for "thin structures" like hair. In the latter case, the binary segmentation should, however, be of sub-pixel accuracy. Obviously, the assumption is violated for transparencies as well as motion blur. Furthermore, a sufficiently precise alpha matte is required as input to be able to estimate the sub-pixel accurate binary segmentation. For this reason, a computationally demanding iterative procedure is used.

The present invention was especially inspired by GrabCut as presented in C. Rother et al.: "Grabcut - interactive foreground extraction using iterated graph cuts", ACM Transactions on Graphics - Proceedings of ACM SIGGRAPH 2004, Vol. 23 (2004), pp. 309-314, where a binary segmentation is refined in a "border matting" stage. It is explicitly assumed that the complete object border is formed by a hard edge.

The model used in the above approach consists of a sigmoid function. Basically, it is checked in how far the alpha values predicted by a sigmoid function match the observed color transition. As every potential function needs to be tested, this procedure is not only computationally demanding, but also restricted to a finite set of parameters and thus a finite precision. This is probably also the reason why only symmetric sigmoid functions with two parameters are checked.

Most state-of-the-art alpha matting approaches have the problem that solid objects tend to be estimated as increasingly transparent towards their borders. In addition, even obvious background areas typically become a more or less transparent attachment to the foreground object.

## SUMMARY OF THE INVENTION

It is thus an object of the present invention to propose an improved solution for performing alpha matting.

According to the invention, a method for performing alpha matting on an image comprises:

- retrieving object contour information for the image;
- determining hard edges based on the retrieved object contour information using an edge model; and
- assigning alpha values to pixels of the image in a vicinity of a determined hard edge based on the edge model.

Accordingly, an apparatus configured to perform alpha matting on an image comprises:

- a contour retrieving unit configured to retrieve object contour information for the image;
- an edge decision unit configured to determine hard edges based on the retrieved object contour information using an edge model; and
- an alpha assignment unit configured to assign alpha values to pixels of the image in a vicinity of a determined hard edge based on the edge model.

Similarly, a computer readable storage medium has stored therein instructions enabling performing alpha matting on an image, which when executed by a computer, cause the computer to:

- retrieve object contour information for the image;
- determine hard edges based on the retrieved object contour information using an edge model; and
- assign alpha values to pixels of the image in a vicinity of a determined hard edge based on the edge model.

The term "hard edge" denotes the abrupt color transition at the border of an opaque object in an image that is merely caused by the finite resolution of the recording camera and defocus aberration. The disclosed solution is, however, also applicable to the treatment of mild motion blur.

A general idea of the proposed approach is to explicitly detect and model hard object edges, which are merely caused by defocus aberration or (mild) motion blur. One advantage of the proposed solution is that it allows getting rid of the artifacts at hard object edges, which are produced by most state-of-the-art alpha matting approaches. A further advantage, however, is that the proposed solution can be used as a simple extension to basically any one of these alpha matting algorithms.

Alpha matting and thus the soft extraction of objects from a still image or a video sequence is a fundamental problem in computer vision in general and movie post-production in particular. Post-production facilities are highly interested in improvements to their current method of time-consumingly rotoscoping objects and applying some manually adjusted feathering to obtain accurate and temporally consistent soft object borders. The proposed solution is an important step in this direction.

In order to be able to determine hard edges, an initial alpha matte is generated, e.g. using closed-form matting. Then, for retrieving object contour information for the image, segments are generated between matching pixels of foreground and background contour pairs in one or more trimaps associated to the image. Alternatively, an edge detection algorithm is applied to the image or the initial alpha matte, edges obtained with the edge detection algorithm are dilated, and segments are generated from the dilated edges. The resulting segments can then be used for determining hard edges. For this purpose the edge model is individually fitted to each segment, e.g. using a Levenberg-Marquardt algorithm for non-linear least-squares fitting.

In one embodiment a quality of a detected edge and/or a fitting error of the edge model are considered for determining hard edges. These parameters allow a sufficiently reliable detection of hard edges.

In one embodiment a sliding window is laid over the segments, a median edge score is determined for the window from the fitting error or from the fitting error and the quality of a detected edge, and a segment is determined to be a hard edge if the median edge score is above a threshold. This approach ensures that several adjacent segments need to be scored as hard edge in order to be certain that there actually is an edge. At the same time discontinuities in the scores are preserved.

In one embodiment a segment is only determined to be a hard edge if parameters of the edge model vary smoothly from segment to segment along the object contours. The idea behind this condition is that if the parameters of the edge model for adjacent segments are far apart and jump a lot, then no real edge is present.

In one embodiment for assigning alpha values to pixels of the image in a vicinity of a determined hard edge the edge model is fitted to the segments of the determined hard edge and a smoothness term is used to enforce that neighboring segments are fitted with similar parameters of the edge model. This is a very efficient way to achieve the desired goal of giving hard edges a smooth alpha value transition corresponding to the edge model.

For a better understanding the invention shall now be explained in more detail in the following description with reference to the figures. It is understood that the invention is not limited to this exemplary embodiment and that specified features can also expediently be combined and/or modified without departing from the scope of the present invention as defined in the appended claims.

## BRIEF DESCRIPTION OF THE DRAWINGS

Fig. 1    depicts three different edge functions,

Fig. 2    shows two hard edge samples taken from test images,

Fig. 3    illustrates the influence of a control parameter on the smoothness of matting results obtained with closed-form matting,

Fig. 4    shows sigmoid functions for hard edges and hair obtained from histogram values,

Fig. 5    depicts edge scores and the resulting categorization for an exemplary input image,

Fig. 6    schematically shows a method according to the invention for performing alpha matting, and

Fig. 7    illustrates an apparatus adapted to implement a solution according to the invention for performing alpha matting.

## DETAILED DESCRIPTION OF PREFERED EMBODIMENTS

In the following one specific embodiment of the proposed solution shall be described in detail. Though this embodiment is based on a closed-form matting system, the proposed hard edge improvements can basically be applied to any alpha matte in which hard edges are already captured well enough and where a trimap is given.

Mathematically the problem of alpha matting can be expressed by the *compositing equation:*

$$I = \alpha F + (1 - \alpha)B. \qquad (1)$$

It states that the color *I* of every pixel in the image is a mixture of a foreground color *F* and a background color *B*. The mixing coefficient $\alpha \in [0; 1]$ gives alpha matting its name. It is 1 for pure foreground pixels, 0 for pure background pixels and can be any value in between for partly transparent pixels.

The first step for improving the alpha matte around hard edges is to find a valid model for what the alpha value transitions look like for hard edges. Using the model, hard edges in the image are detected and the alpha matte is improved to better match the model.

In order to improve alpha matting around hard edges, these edges first have to be found and distinguished from fur, hair and other regions. Therefore, a model of what the alpha value transitions look like in these regions is necessary.

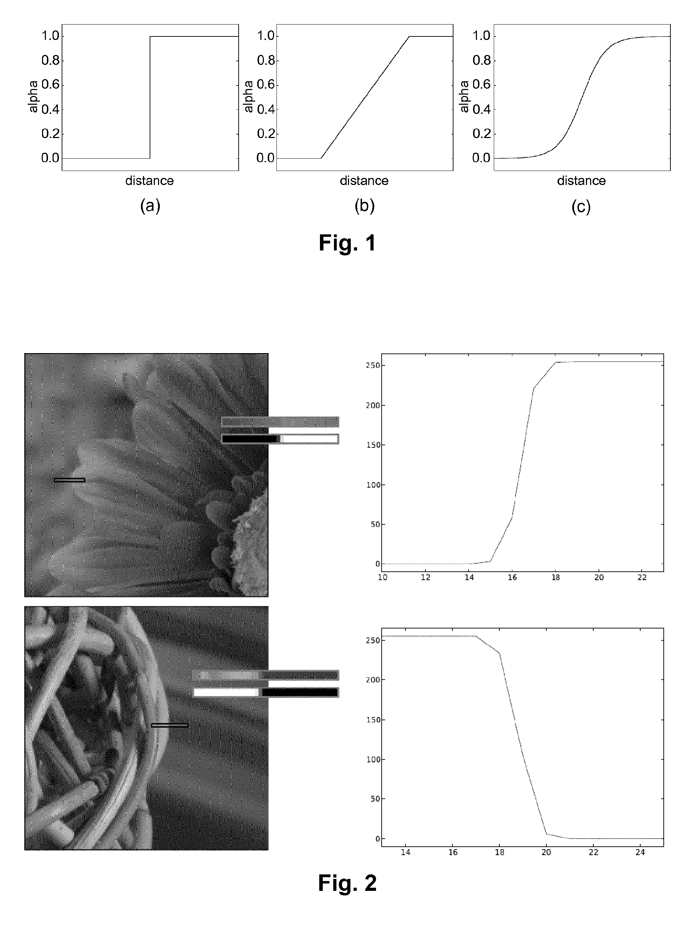

Fig. 1 depicts three different edge functions, namely a step edge function in Fig. 1(a), a linear approximation of a smooth step function in Fig. 1(b), and a Gaussian blurred step function in Fig. 1(c).

A hard edge in reality usually does not lie on a pixel-border in a digital image. This is due to blur effects caused by the point spread function of the camera, motion blur, defocus blur and other factors. Therefore, the simple model of a hard step function, like shown in Fig. 1(a) does not apply to edges in images.

The problem of edge modeling has been investigated before. The Coherent Matting system described in H. Y. Shum et al.: "Pop-up light field: An interactive image-based modeling and rendering system", ACM Transaction of Graphics, Vol. 23 (2004), pp. 143-162, uses a linear step function approximation as the edge model. It has the form:

$$f(d) = \frac{d}{w} \cdot 0.5 + 0.5, \qquad (2)$$

where w is the width of the transition from zero to one (see Fig. 1(b)). This is a very simple method of approximating blurred edges and thus cannot be expected to be very accurate.

A more accurate, widely used model for the alpha value transition for edges is the Gaussian blurred step function. It assumes that step edges, that are sharp in reality, appear as being blurred with a Gaussian blur kernel in the image.

The model describes the alpha value transition with a sigmoid function of the form:

$$s(t, \Delta, \sigma) = \frac{1}{1 + e^{-\sigma(t-\Delta)}}. \qquad (3)$$

The parameter $\Delta$ determines the center of the edge. The parameter $\sigma$ defines the slope and thereby the width of the transition. For an illustration of this function see Fig. 1(c). To illustrate the usage of an edge model to produce plausible alpha mattes around edges, the GrabCut system is considered. In GrabCut, a binary segmentation is computed using an iterative graph-cut based optimization approach. After the binary segmentation has been computed the so-called border matting is applied. In a fixed-width ribbon around the detected segmentation border, transparency values are computed, while the rest of the matte remains binary. The ribbon is first partitioned into segments that are orthogonal to the border. Using a dynamic programming approach the sigmoid function is fitted to each segment, defining the alpha value transition from 0 to 1 or vice versa. This sigmoid function is used in the data term of the energy function that is minimized. Besides the data term the energy function contains a smoothing term that regularizes the differences in $\Delta$ and $\sigma$ between neighboring segments. This way, visual artifacts in the resulting alpha matte are prevented.

By using only a narrow ribbon around the binary segmentation border for alpha matting, broad transitions for hair or very large blur cannot be handled correctly by GrabCut. This is intended by the authors as they purposely only concentrate on transparency around the edges. That means that the sigmoid edge model is used for all types of borders.

Fig. 2 shows two hard edge samples taken from test images, i.e. samples of hard edges and their respective ground truth alpha values. The alpha values lie in the range from 0 to 255.

To determine how well the sigmoid model fits, samples of hard edges have been extracted from test images with accompanying ground truth alpha mattes. These samples are one pixel wide horizontal or vertical lines from the ground truth alpha mattes as shown in Fig. 2. Using only horizontal and vertical samples allows easy manual extraction and illustration. The samples are representative for edges of any direction, though.

A more general form of the sigmoid function is the *generalized logistic function,* which has the form:

$$Y(t) = A + \frac{K - A}{(1 + Q e^{-\sigma(t-\Delta)})^{\frac{1}{v}}}. \qquad (4)$$

*A* is the value of the lower and *K* the value of the upper asymptote. In the case of a hard edge these values are fixed to 0 and 1, respectively, as one end is pure background and the other end is pure foreground. The parameter *Q* is redundant, as it can be expressed through:

$$Qe^{-\sigma(t-\Delta)}$$
$$= e^{\ln(Q)-\sigma(t-\Delta)}$$
$$= e^{-\sigma(t-\Delta_2)} \quad . \qquad (5)$$
$$\text{for } \Delta_2 = \Delta + \frac{\ln(Q)}{\sigma}$$

This allows a simplification of the general function to

$$Y(t) = A + \frac{1}{(1 + e^{-\sigma(t-\Delta)})^{\frac{1}{v}}}, \qquad (6)$$

which has three remaining free parameters besides $t$. The $\Delta$ parameter defines the position of the maximum slope of the function, which would be the center of the edge. The parameter $\sigma$ determines the maximum slope itself. These two parameters alone only allow symmetric curves with respect to the edge center. However, through the modification of the parameter $v$, the position of the maximum slope can be shifted to either asymptote. This is the difference between this model and the model described before.

The results of fitting 15 samples of real hard edges with sigmoid functions having different free parameters are shown in the following Table 1.

Table 1

| free parameters | average absolute error | minimum error | maximum error |
|---|---|---|---|
| $\Delta, \sigma$ | 5.551041 | 1.321717 | 14.033224 |
| $\Delta, \sigma, v$ | 1.876792 | 0.238370 | 5.886816 |

It shows that allowing $v$ to vary improves the fit as it eliminates the constraint that an edge has to be equally steep on both sides of the center. Using the additional parameter $v$ shows the ability to model hard edges, on average, about three times as accurately for the sample edges. For this reason the sigmoid function of equation (6) is preferably used for the edge model, instead of the two parameter sigmoid function.

The closed-form matting system described in A. Levin et al.: "A closed-form solution to natural image matting", IEEE Transactions on pattern analysis and machine intelligence, Vol. 30 (2008), pp. 228-242, needs to be explained in detail, since it is used as the basis for the proposed method for enhancing an alpha matte with hard edge modeling. It is applied to obtain an initial alpha matte on which the detection and improvement of hard edges follow.

The underlying assumption made in the closed-form matting system is that in a small window, e.g. 3×3 or 5×5 pixels, the true fore- and background colors each lie on a single line in color space.

For a gray scale image we can rearrange the compositing equation (1):

$$I_i = \alpha_i F_i + (1 - \alpha_i) B_i$$
$$\Leftrightarrow \quad \alpha_i = \frac{I_i - B_i}{F_i - B_i}$$
$$\Leftrightarrow \quad \alpha_i = \frac{1}{F_i - B_i} I_i + \left( -\frac{B_i}{F_i + B_i} \right) \qquad (7)$$
$$\Leftrightarrow \quad \alpha_i = a_i I_i + b_i$$

Under the assumption that $F$ and $B$ are approximately constant in a small window, $a_i$ and $b_i$ are constant, too. It follows that

$$\alpha_i \approx a I_i + b, \forall i \in w , \qquad (8)$$

where $w$ is the window around pixel $i$. There is thus a linear relationship between $\alpha_i$ and $I_i$. Based on this assumption the system uses the following cost function, which is to be minimized:

$$J(\alpha, a, b) = \sum_{j \in I} \left( \sum_{i \in w_j} \left( \alpha_i - a_j I_i - b_j \right)^2 + \varepsilon\, a_j^2 \right).$$ (9)

Minimizing the term $(\alpha_i - a_j I_i - b_j)^2$ fulfills the condition given in equation (8) and $\varepsilon\, a_j^2$ is a regularization term for when the color is the same throughout the whole window $w_j$. Rewritten in matrix notation, equation (9) can be expressed as

$$J(\alpha, a, b) = \sum_k \left\| G_k \begin{bmatrix} a_k \\ b_k \end{bmatrix} - \bar{\alpha}_k \right\|,$$ (10)

where

$$G_k = \begin{bmatrix} I_1 & 1 \\ I_2 & 1 \\ \vdots & \vdots \\ I_{|w_k|} & 1 \\ \sqrt{\varepsilon} & 0 \end{bmatrix} \text{ and } \bar{\alpha}_k = \begin{bmatrix} \alpha_1 \\ \alpha_2 \\ \vdots \\ \alpha_{|w_k|} \\ 0 \end{bmatrix},$$ (11)

with $|w_k|$ being the size of the window. To find the minimum of equation (10) in $a$ and $b$ one has to minimize each summand, which can be achieved with the condition

$$G_k \begin{bmatrix} a_k \\ b_k \end{bmatrix} = \bar{\alpha}_k.$$ (12)

This can be minimized using the pseudo-inverse of $G_k$:

$$\underset{a,b}{\arg\min} \left\| G_k \begin{bmatrix} a_k \\ b_k \end{bmatrix} - \bar{\alpha}_k \right\|^2 = (G_k^T G_k)^{-1} G_k^T \bar{\alpha}_k.$$ (13)

Substituting this solution into equation (10) eliminates $a$ and $b$ from the equation and leaves us with a cost function that is quadratic in $\alpha$:

$$J(\alpha) = \min_{a,b} J(\alpha, a, b) = \alpha^T L \alpha,$$ (14)

where $L$ is the so called *Matting Laplacian* and it is constructed by inserting the results from equation (13) into equation (10).
For color images the system uses the *Color Line Model,* which states that in a small window the foreground colors $F_i$ all lie on a line in RGB space and that the same is true for the background colors. Mathematically this means that in the compositing equation (1) one can substitute for $F$ and $B$, in a small window, linear combinations of two constant colors each. Simplifying the resulting equation gives a 4D linear model:

$$\alpha_i \approx \sum_c a^c I_i^c + b, \forall i \in w .\qquad(15)$$

For color images the cost function to be minimized is (compare equation (9)):

$$J(\alpha, a, b) = \sum_{j \in I} \left( \sum_{i \in w_j} \left( \alpha_i - \sum_c a_j^c I_i^c - b_j \right)^2 + \varepsilon \sum_c a_j^{c^2} \right) .\qquad(16)$$

Again, eliminating $a^c$ and $b$ from the cost function is possible and for color images, too, the problem can be expressed as:

$$J(\alpha) = \alpha^T L \alpha .\qquad(17)$$

Minimizing this cost function can be achieved by solving a sparse set of linear equations, yielding the result for $\alpha$.
Once $\alpha$ is computed, $F$ and $B$ need to be reconstructed. The function to be solved for this purpose is the compositing equation, combined with a smoothness prior:

$$\min \sum_{i \in I} \sum_c (\alpha_i F_i^c + (1 - \alpha_i) B_i^c - I_i^c)^2 + ,$$
$$|\alpha_{i_x}| \left( \left( F_{i_x}^c \right)^2 + \left( B_{i_x}^c \right)^2 \right) +\qquad(18)$$
$$|\alpha_{i_y}| \left( \left( F_{i_y}^c \right)^2 + \left( B_{i_y}^c \right)^2 \right)$$

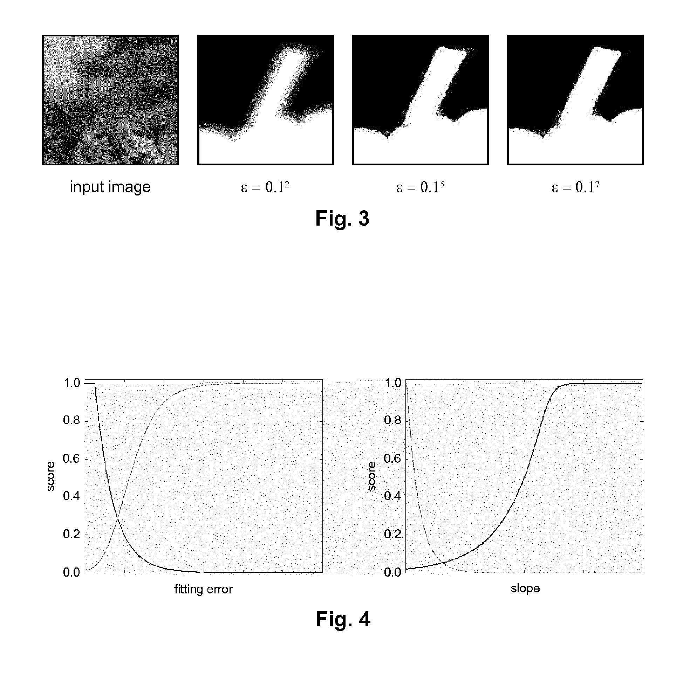

where $F_{i_x}^c$, $F_{i_y}^c$, $B_{i_x}^c$, and $B_{i_y}^c$ are the $x$ and $y$ derivatives of $F^c$ and $B^c$. This cost function is again, for a fixed $\alpha$, quadratic and can be solved via a sparse set of linear equations.
The closed-form matting system produces state-of-the-art results that perform very well compared to other methods. Still, for hard edges the transition from pure foreground to pure background is often noisy, as shown in Fig. 3. This is due to image texturing and natural noise inherent in photography. Through the parameter $\varepsilon$ in equation (9) one can control how smooth the alpha matte will be. The higher the value of $\varepsilon$, the smoother the matte. This effect is illustrated in Fig. 3, where different values for $\varepsilon$ have been used for matting.
No matter what value of $\varepsilon$ is chosen, the hard edges in the image always appear noisy in the alpha matte. Smoothing the matte only spreads the error to a broader area. However, one also sees that the edge itself is visible in the results, it is just surrounded by noise.
For this reason in the proposed method the closed-form matting is used as a first step and the result is used to detect the hard edges, which are then improved using the edge model of equation (6). The color line model holds on hard edges if the foreground and background colors are linear mixtures of only two colors each. If the object is highly textured the assumption is not fully satisfied. In Fig. 3 the stem of the pumpkin is very textured and the background is not uniformly colored, either. That is why the hard edges are noisy in the alpha matte. When closely looking at the area on the left of the stem, where the background color is a uniform lighter grey, one can see that the alpha matte here is less noisy. That is because, at least for the background, the color line model holds in this area.
In summary the closed-form matting system is well suited for providing the initial alpha matte, on which the edge detection and edge improvement can be done.
To fit the one-dimensional edge function to the object borders of the closed-form matting result, the unknown area is partitioned into narrow segments that are orthogonal to the edges. To each segment, the edge model can then be fitted. The segmentation is similar to that used in GrabCut's border matting. However, in GrabCut a binary segmentation is created first and then segments of equal length are created from the segmentation line in a fixed-width ribbon around the line. In contrast to GrabCut, after creating the initial alpha matte using closed-form matting, no edge information is available. The way segments are created here is from the trimap.

First the contour(s) around the unknown area is(are) extracted. This may result in more than one contour since the unknown area is not always one single connected region. The extracted contours are divided into pairs of foreground and background contours for each connected region of the unknown area. This is only possible where the unknown area borders on both foreground and background. These are the areas where hard edges can occur. Some contours only border with either foreground or background. This can happen, for example, in an area containing a lot of hair. If some of the background shines through at some point, most of the hair is foreground. However, the transparencies cause an isolated part of the unknown area, surrounded only by foreground. These cases are simply omitted because they usually do not contain hard edges.

The foreground and background contour pairs are matched using a dynamic programming optimization. Each pixel in one contour is assigned a pixel from the opposite contour. The cost function that is minimized is the distance between two points, raised to the power of four. Different cost functions have been considered and this has shown to give the best results. The criteria for a good segmentation are:

- Orthogonality: A segment should be orthogonal to the contained edge. Although no edge information is available, yet, it is assumed that the edges are parallel to the path of the unknown area and thus the segments should be orthogonal to it.
- Narrow segments: Big segments could produce visual artifacts when fitting the edge model to them. Using the dynamic programming method, each pixel of a contour is matched to one pixel on the opposite contour. This allows to create pixel-wide segments, so this criterion is fulfilled in any case.

When using the distance between two points as the cost function, the resulting segments are often not orthogonal to the path of the unknown area. If, however the distance is given a higher cost, by raising it to a higher power, the segments become more orthogonal. The reason is that with increasing cost a higher number of matches is created. Dynamic programming finds the global minimum for the sum of all costs. This sum is lowered by having fewer terms in the case of using the distance as the cost. When giving a larger distance a higher cost penalty, by raising the distance to a higher power, having fewer terms does not account for the higher distance cost anymore. For this reasons the segments become more orthogonal.

To obtain segments from the point matches, a one pixel wide line is drawn from one point to the other using Bresenham's algorithm. All points on this line are assigned to a segment. A point might be matched to more than one point on the opposite contour. Therefore, the resulting segments may overlap. Some points may not be part of any segment after all lines have been drawn. Each of these points is assigned to the nearest segment, i.e. the segment whose line has the shortest distance to the point. This way the segments still have a width of only one pixel or a few pixels.

The proposed segmentation approach is relatively efficient as it only takes $O(n^2)$ steps, with $n$ being the number of pixels in the contour, to compute the matches for two contours, and it produces very good results. Other methods have also been tried, for example simply using for every point on one contour the spatially closest point on the other. This, however, does not guarantee that the resulting lines do not cross each other, a property inherent to the dynamic programming approach. Another problem can occur if segments are not of similar form or size, which is also circumvented by using dynamic programming.

An alternative method for creating segments orthogonal to the edges in an image is to use the alpha matte obtained with closed-form matting and to run an edge detection algorithm, for example a Canny edge detector, on the matte or on the original image. The obtained edges are then dilated by a fixed width and then segmented in a similar way as described above. This makes the segmentation independent of the trimap.

If the shape of the unknown area is unfavorable or if it has holes in it, the produced segments may not be fully orthogonal to its path and/or very elongated. However, such shapes indicate that there is no hard edge anyway. Usually the unknown area in the regions of interest for matting hard edges has the form of a tube and can be successfully segmented with the proposed method.

The 2D points of each segment are first projected into a one-dimensional sub-space in order to be able to fit the sigmoid edge function to them. Each segment was generated from two matching points on the contours of the unknown area. These points determine a line onto which the 2D points are orthogonally projected. The center of the line segment between the two points is assumed to be the origin of the one-dimensional sub-space. Since the segments are all about one pixel wide, through the projection, almost no information is lost. Using wider segments could skew the fitting results, because multiple 2D points might be projected onto the same 1D point.

After retrieving the one-dimensional projections, to each segment the sigmoid function is fitted. Since a point in the alpha matte may be part of more than one segment, the computed fitting values are averaged to obtain the final fitting value at each pixel of the alpha matte.

The method used to fit the sigmoid function to the segments is the Levenberg-Marquardt algorithm for non-linear least-squares fitting. Given a set of data samples, a function with an arbitrary number of unknown parameters and an initial guess for the optimal parameter values, the algorithm iteratively finds a local minimum of the sum of squares of the deviations between the estimated curve and the given data samples.

For the Levenberg-Marquardt algorithm to find an optimal solution it is helpful that the initial guess is close to the optimal parameters. For the give sigmoid function, these initial values are assigned:

- σ (maximum slope): It is initially set to either +2 or -2 depending on the alpha values at the points at the ends of a segment. If the left-most alpha value is closer to zero than the right-most alpha value, the initial slope is set to +2, assuming that the left end of the segment lies in the background area and the right end lies in the foreground area.
- Δ (center of the edge): It is initially set to 0, as this is the spatial center position of the projected segment points.
- ν (shift of the maximum slope towards one asymptote): This parameter is initially set to 1, which means that there is no shift to either asymptote.

This initialization assumes a symmetric, centered smooth step function, which always converges to an optimal solution for the used test images.

In order to categorize the segments into hard and soft edges and hair or other structures, two metrics are taken into account. The first metric is the absolute fitting error of the sigmoid fit with respect to the alpha matte provided by the closed-form matting. The idea is that the lower the fitting error, the better the model fits and so the more likely the given segment describes a hard edge. The second metric is the slope of the edge function, which is assumed to be greater the harder the edge.

To be able to score the hardness of an edge depending on a fit, typical values for different properties of a fit were gathered. From the test images samples of different categories were marked manually. The corresponding segments were extracted automatically and the edge model was fitted to each of them. This provided a large number of samples. The different categories are:

- Hard edge: Definite hard edges with an alpha value transition that is only a few pixels wide and matches the edge model. The edges can be blurred, which widens the transition, but the edge model still holds. This category is where the alpha matte will be improved.
- Fur: This includes fur or cloth where single hairs may be crossing an edge. Such an area typically almost looks like a hard edge, but the edge model does not hold, because the transition from foreground to background is not always monotonic.
- Hair and other structures: These are the cases that are definitely not hard edges, like regions with a lot of hair or regions that contain transparencies, like smoke or glass.

The first property considered is the fitting error. For the three categories, the edge model was fitted to all samples and the histograms for the fitting errors were computed. The fitting error for a segment was not averaged in any way, it is the sum of the absolute differences between the original alpha values and the fitted values. Averaging over the number of pixels in a segment would skew the results, because the length of segments may differ significantly, while they are always about one pixel wide. Consider for example a segment starting in the background, containing some hair and ending in the foreground. The sigmoid function is constructed to end in the values 0 and 1, so the ends of the segment would have a fitting error of close to zero. If one would prolong the segment into the foreground and background regions, the sum of absolute difference error would stay almost the same, since the background would be fitted a value of 0 and the foreground would be fitted a value of 1. However, an averaging over the segment size would lower the error value while the quality of the fit in the center area would stay the same.

From the histograms it was found that the different categories have their peaks at different values, especially hard edges and hair, but they still overlap significantly around an error value of 5. In this overlapping area the fitting error is not enough to differentiate between different categories.

Another thing that has been noted is that the fitting errors for hard edges and for fur are very similar. This is due to the fact that the edge model fits quite well for fur, too. Furry areas in the test images were typically visually close to hard edges, especially if the edge is blurred. Then the transition widths are similar, too. In most cases there is an almost gradual transition from foreground to background and there is not jump back and forth between high and low alpha values, as it would in more hairy areas. This means that the sigmoid model can be fitted without a high error. Only regions with a lot of hair and other semitransparent structures in the alpha matte cannot be modeled correctly, so the fitting error for them is much higher.

The second metric that is used is the maximum slope of the fitted sigmoid function. The determined histograms for this metric showed a large gap between the peak values for hard edges and those for hair and fur. The overlap was not as big, compared to the histograms of the fitting errors, which made these histograms more separable. That is why the slope is given a higher weight in the final score function.

Another observation that was made is that the values for the slopes of hard edges can be arbitrarily high.

Theoretically an edge could change from 0 to 1 in one pixel and thus have an infinite slope, although this case is not realistic for natural images. Similarly, the fitting error for hair can be arbitrarily high as well.

Another metric that was investigated is the difference between centers of the sigmoid functions. Since neighboring segments might vary in their length, for example if one segment belongs to a narrow part of the trimap containing a hard edge but the next segment is larger because it includes hair, it is not possible to compute the center differences on the sigmoid curves themselves. The center has to be projected back into the 2D image space to be comparable. The intuitive idea is that if the centers of the computed edges are far apart and jump a lot, then no real edge is present. An edge should yield center points that are close together and smooth. The histograms for this metric, however, were found to be not well separable, which is why it is not used for the overall edge score.

For both metrics a separate score is computed. The final score, stating how hard an edge is, is a weighted combination of these two. The weights depend on how separable the histograms are.

To score an edge based on the fitting error, the histograms for hard edges and for hair were compared. The histogram for fur was not used in this case because it is very similar to that for the hard edges. This will be accounted for by giving this first metric a lower weight for the overall score function.

Although the histogram values are low for errors of less than 3, the desired score for such errors should be high. A low fitting error means that the edge model fits very well, so the classification should favor the hard edge category. For hair, the fitting errors can be arbitrarily high, meaning the edge model does not fit at all. A fitting error beyond the first peak of the histogram should score a segment as hair. For these reasons, the functions used to describe the histograms are sigmoid functions, ranging from 0 to 1 (from 1 to 0, respectively). For hard edges, all values below the histogram's left peak are scored as 1. The transition from 1 to 0 is determined by fitting the sigmoid function to the falling histogram values. The same is done to obtain a function for the hair histogram. The resulting sigmoid functions are shown in Fig. 4 (black line: hard edge; grey line: hair). Note that these sigmoid functions have the same free parameters as the function used for the edge model.

Let $s_{\mathrm{edge}}^{\mathrm{err}}$ denote the sigmoid function for the fitting error for hard edges and $s_{\mathrm{hair}}^{\mathrm{err}}$ that for the slope, respectively. The overall score of a given fitting error is computed simply as the difference of these functions:

$$s^{\mathrm{err}}(e) = s_{\mathrm{edge}}^{\mathrm{err}}(e) - s_{\mathrm{hair}}^{\mathrm{err}}(e) . \qquad (19)$$

The score for the fitting error lies in the range from minus one to one, where one means a hard edge, minus one means hair, and a value of zero means that no definitive decision can be made from the fitting error alone.

Analogously to the fitting error, for the slope score, two functions $s_{\mathrm{edge}}^{\mathrm{slope}}$ and $s_{\mathrm{nonedge}}^{\mathrm{slope}}$ are used. Since the slope histograms for hard edge and fur are well separable and furry areas should not be wrongly categorized as hard edge, the histogram values for fur and hair are combined before fitting the sigmoid function $s_{\mathrm{nonedge}}^{\mathrm{slope}}$ to them. The two functions are again combined to given the overall slope score:

$$s^{\mathrm{slope}}(s) = s_{\mathrm{edge}}^{\mathrm{slope}}(s) - s_{\mathrm{nonedge}}^{\mathrm{slope}}(s) . \qquad (20)$$

Again, the result is in the range from -1 to 1 and the higher the score, the more likely a hard edge is present.

The final score for how hard an edge is, is a linear combination of the two metrics (19) and (20):

$$s^{\mathrm{edge}}(e, s) = \lambda \cdot s^{\mathrm{err}}(e) - (1 - \lambda) \cdot s^{\mathrm{slope}}(s), \quad \lambda \in [0..1] \qquad (21)$$

where $e$ is the fitting error for a segment and $s$ is the slope of the fitted sigmoid function. The resulting overall edge score lies between minus one and one since the two metrics lie in the same range. As the histograms for the slope metric have a smaller overlap and thus are better separable, giving the fitting error a lower weight than the slope produces better results than weighting them equally. For the images in the benchmark, a value of $\lambda = 0.4$ has shown to produce the best results.

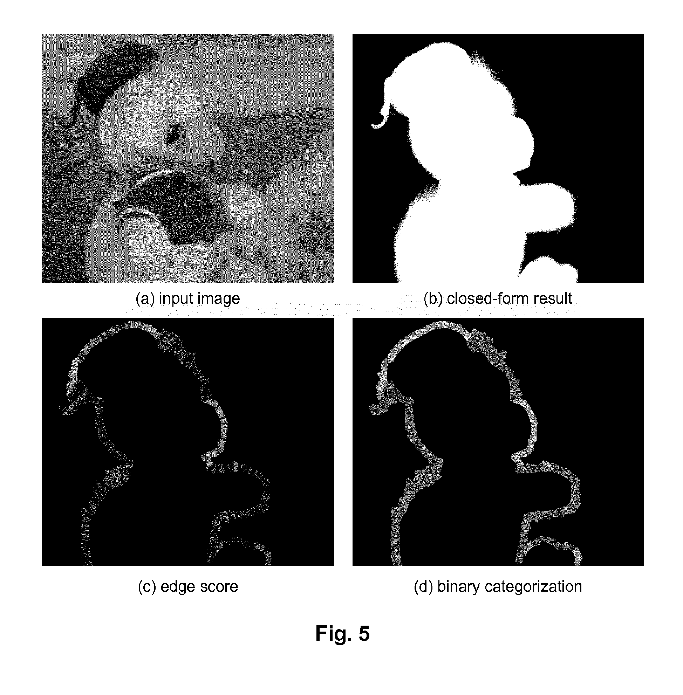

The edge scores for an image containing all three considered categories are shown in Fig. 5(c). Fig. 5(a) depicts the original image, Fig. 5(b) the alpha matte produced by closed-form matting. The beak or the top of the hat are examples for hard edges. Although the material is not really solid but a little furry, the borders can still be categorized as hard edges since the fur is only minimal. The score reflects that as it gives these areas a value near one. The arm and the back of the head, however, are more furry and one can see little strands of hair standing out. This material is still categorized mainly as edge more than as hair. However, the scores are closer to zero. The head and tail of the duck contain long hair and these areas are clearly marked as hair and not as containing any hard edges. The score here is always below zero and often close to minus one. Note also that on the back of the hat there is a piece of cloth. Here the unknown area covers both cloth and hat at the same time, yielding segments that cannot be fitted correctly as they contain more than one edge. These cases are correctly scored low because the edge model does not hold in these regions.

To improve the alpha matte on hard edges, a decision has to be made in which region a hard edge is present. The score is on a continuous scale between minus one and one. The goal now is to create a binary categorization, dividing the image into two regions: hard edges and hair. The used heuristic is that several adjacent segments need to be scored as hard edge in order to be certain that there actually is an edge. Even in hairy regions single segments can have a high edge score while the neighbors will be scored low. Considering a wider region will, therefore, separate edges from hair.

A sliding window is laid over the segments and the median is computed for every window. If the median is above a certain threshold then a segment is categorized as hard edge. Using the median preserves discontinuities in the scores, for example in the image in Fig. 5(c) around the beak and on the bow tie a hard edge is detected. The edge becomes very furry on the border from the bow tie to the arm. The scores suddenly drop from values around one to values around zero. The desired result for the binary categorization is that at this border the hard edge region ends. Using the median satisfies this requirement.

The threshold, above which a segment is categorized as a hard edge, determines how furry an edge can be to still be considered an edge. A threshold of 0.3 in combination with a 40-segments wide sliding windows has empirically been found to produce good categorizations. A sample result is presented in Fig. 5(d). The hat and the beak are correctly categorized as hard edges (light grey), while the more furry area (dark grey) around the arm is not considered a hard edge. By decreasing the threshold one can allow more furry areas to be categorized as hard edges. This could be used for more blurred images.

After the binary categorization, the alpha values in the detected hard edges are replaced by those from the edge fitting while the rest is copied from the closed-form alpha matte. This is the simplest way to achieve the desired goal of giving hard edges a smooth alpha value transition corresponding to the edge model. More advanced techniques may likewise be used, as will described in the following.

In the presented method, the alpha values are replaced by their fitting results for detected hard edges. This improves the visual quality of the matte as the edges become less noisy. However, fitting each segment independently may cause the sigmoid function to change significantly between neighboring segments, not only in hairy regions, but on edges as well. This might result in visual artifacts, for example if one sigmoid has a much greater slope than its neighbor(s) due to noise in the original alpha matte. This can be improved further by refitting each connected region of detected hard edges. In this case a smoothness term is used to enforce that neighboring segments are fitted with similar sigmoid functions.

The hard edges in the proposed method are separated from non-edges very accurately. However, a dedicated edge detection algorithm, for example the Canny edge detector, can be combined with the proposed method to improve the results even further.

In addition, it is also very helpful to check in how far the shape of the best fitting function only changes slowly along the object contour. The amount of defocus aberration should only change significantly with a significant change in the distance between the object and the camera. Additionally, even motion blur should only change slowly especially for the rigid parts of an object.

Alternatively, the size of the segments wherein one specific sigmoid function needs to fit can be increased. This directly results in larger fitting errors for soft edges.

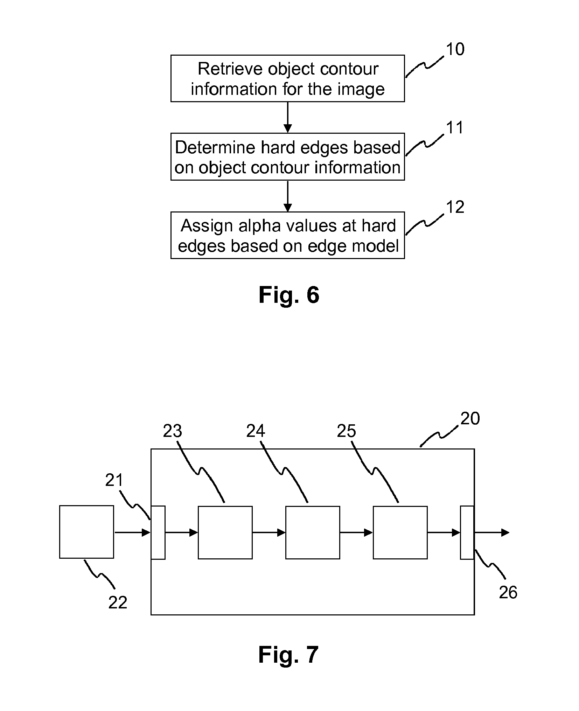

A method according to one embodiment of the invention for performing alpha matting on an image is schematically shown in Fig. 6. In a first step object contour information is retrieved 10 for the image. Then hard edges are determined 11 based on the retrieved object contour information using an edge model. Finally, alpha values are assigned 12 to pixels of the image in a vicinity of a determined hard edge based on the edge model.

Fig. 7 schematically illustrates an apparatus 20 configured to implement a solution according to the invention for performing alpha matting on an image. The apparatus 20 has an input 21 for receiving the image, e.g. from a network or a local storage 22. A contour retrieving unit 23 retrieves 10 object contour information for the image. An edge decision unit 24 then determines 11 hard edges based on the retrieved object contour information using an edge model. Finally, an alpha assignment unit 25 assigns 12 alpha values to pixels of the image in a vicinity of a determined hard edge based on the edge model. The resulting alpha values are preferably made available for further processing via an output 26. The different units 23, 24, 25, may likewise be fully or partially combined into a single unit or implemented as software running on one or more processors. In addition, the input 21 and the output 26 may likewise be combined or partially combined into a single bidirectional interface.

**Claims**

1. A method for performing alpha matting on an image, the method **comprising:**

   - retrieving (10) object contour information for the image;
   - determining (11) hard edges based on the retrieved object contour information using an edge model; and
   - assigning (12) alpha values to pixels of the image in a vicinity of a determined hard edge based on the edge model.

2. The method according to claim 1, **further** comprising generating an initial alpha matte.

3. The method according to claim 2, **wherein** the initial alpha matte is generated using closed-form matting.

4. The method according to one of claims 1 to 3, **wherein** for retrieving (10) object contour information for the image segments are generated between matching pixels of foreground and background contour pairs in one or more trimaps associated to the image.

5. The method according to claim 1, **wherein** for retrieving (10) object contour information for the image an edge detection algorithm is applied to the image, edges obtained with the edge detection algorithm are dilated, and segments are generated from the dilated edges.

6. The method according to claim 4, **wherein** the edge model is individually fitted to the initial alpha matte in each segment.

7. The method according to claim 6, **wherein** the edge model is fitted to the segments using a Levenberg-Marquardt algorithm for non-linear least-squares fitting.

8. The method according to claim 5, **wherein** for determining (11) hard edges a quality of a detected edge is considered.

9. The method according to one of the preceding claims, **wherein** for determining (11) hard edges a fitting error of the edge model is considered.

10. The method according to claim 9, **wherein** a sliding window is laid over the segments, a median edge score is determined for the window from the fitting error or the fitting error and the quality of a detected edge, and a segment is determined (11) to be a hard edge if the median edge score is above a threshold.

11. The method according to claim 9, **wherein** a segment is only determined (11) to be a hard edge if parameters of the edge model vary smoothly from segment to segment along the object contours.

12. The method according to claim 4 or 5, **wherein** for assigning (12) alpha values to pixels of the image in a vicinity of a determined hard edge the edge model is fitted to the segments of the determined hard edge and a smoothness term is used to enforce that neighboring segments are fitted with similar parameters of the edge model.

13. An apparatus (20) configured to perform alpha matting on an image, the apparatus (20) **comprising:**

    - a contour retrieving unit (23) configured to retrieve (10) object contour information for the image;
    - an edge decision unit (24) configured to determine (11) hard edges based on the retrieved object contour information using an edge model; and
    - an alpha assignment unit (25) configured to assign (12) alpha values to pixels of the image in a vicinity of a determined hard edge based on the edge model.

14. A computer readable storage medium having stored therein instructions enabling performing alpha matting on an image, which, when executed by a computer, cause the computer to:

    - retrieve (10) object contour information for the image;
    - determine (11) hard edges based on the retrieved object contour information using an edge model; and
    - assign (12) alpha values to pixels of the image in a vicinity of a determined hard edge based on the edge model.

Fig. 1

Fig. 2

input image          $\varepsilon = 0.1^2$          $\varepsilon = 0.1^5$          $\varepsilon = 0.1^7$

**Fig. 3**

fitting error                    slope

**Fig. 4**

(a) input image

(b) closed-form result

(c) edge score

(d) binary categorization

**Fig. 5**

Retrieve object contour
information for the image ⌐10

Determine hard edges based
on object contour information ⌐11

Assign alpha values at hard
edges based on edge model ⌐12

**Fig. 6**

**Fig. 7**

Europäisches
Patentamt

European
Patent Office

Office européen
des brevets

## EUROPEAN SEARCH REPORT

Application Number

EP 14 18 9158

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Christoph Rhemann et al.: "High Resolution Matting via Interactive Trimap Segmentation", Online publications of TU Wien , 1 January 2008 (2008-01-01), XP055134737, Retrieved from the Internet: URL:https://www.ims.tuwien.ac.at/publicati ons/tuw-169051/downloads/high-resolution-m atting-via-interactive-trimpar-segmentatio n-technical-report.pdf [retrieved on 2014-08-14] | 1,2,13, 14 | INV. G06T7/00 |
| A | * the whole document * ----- | 3-12 | |
| A | ROTHER C ET AL: "GrabCut - interactive foreground extraction using iterated graph cuts", ACM TRANSACTIONS ON GRAPHICS (TOG), ACM, US, vol. 23, no. 3, 1 August 2004 (2004-08-01) , pages 309-314, XP002340109, ISSN: 0730-0301, DOI: 10.1145/1015706.1015720 * abstract * * Section 4.1 * ----- | 1-14 | |
| | | | TECHNICAL FIELDS SEARCHED (IPC) |
| | | | G06T |
| A | US 6 741 755 B1 (BLAKE ANDREW [GB] ET AL) 25 May 2004 (2004-05-25) * abstract * * paragraphs [0008], [0028], [0035], [0036] * ----- | 1-14 | |
| A | WO 02/21443 A1 (KONINKL PHILIPS ELECTRONICS NV [NL]) 14 March 2002 (2002-03-14) * abstract * * page 2, line 24; figure 1 * * page 3, lines 11-20 * ----- | 1,13,14 | |

The present search report has been drawn up for all claims

| Place of search | Date of completion of the search | Examiner |
|---|---|---|
| Munich | 5 March 2015 | Kessler, Cordula |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 18 9158

This annex lists the patent family members relating to the patent documents cited in the above-mentioned European search report.
The members are as contained in the European Patent Office EDP file on
The European Patent Office is in no way liable for these particulars which are merely given for the purpose of information.

05-03-2015

| Patent document cited in search report | | Publication date | Patent family member(s) | | Publication date |
|---|---|---|---|---|---|
| US 6741755 | B1 | 25-05-2004 | NONE | | |
| WO 0221443 | A1 | 14-03-2002 | CN | 1388948 A | 01-01-2003 |
| | | | EP | 1317735 A1 | 11-06-2003 |
| | | | JP | 2004508641 A | 18-03-2004 |
| | | | US | 2002048402 A1 | 25-04-2002 |
| | | | WO | 0221443 A1 | 14-03-2002 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. WANG et al.** Image and Video Matting: A Survey. *Foundations and Trends® in Computer Graphics and Vision,* 2007, vol. 3, 97-175
- **J. WANG.** Image Matting with Transductive Inference. *Proceedings of the 5th international conference on Computer vision/computer graphics collaboration techniques (MIRAGE'11),* 2011, 239-250
- **C. RHEMANN et al.** High Resolution Matting via Interactive Trimap Segmentation. *Proceeding of the IEEE Conference on Computer Vision and Pattern Recognition (CVPR 2008),* 2008, 1-8

- **C. ROTHER et al.** Grabcut - interactive foreground extraction using iterated graph cuts. *ACM Transactions on Graphics - Proceedings of ACM SIGGRAPH 2004,* 2004, vol. 23, 309-314
- **H. Y. SHUM et al.** Pop-up light field: An interactive image-based modeling and rendering system. *ACM Transaction of Graphics,* 2004, vol. 23, 143-162
- **A. LEVIN et al.** A closed-form solution to natural image matting. *IEEE Transactions on pattern analysis and machine intelligence,* 2008, vol. 30, 228-242